# EUROPÄISCHE PATENTSCHRIFT

(11) **EP 4 331 028 B1**
(45) Veröffentlichungstag und Bekanntmachung des Hinweises auf die Patenterteilung: **11.12.2024**
(21) Anmeldenummer: 22715525.6
(22) Anmeldetag: 28.03.2022
(51) Int. Cl.: H01M 8/0273, F16J 15/02, F16J 15/10, H01M 8/0276, H01M 8/18

(54) **REDOX-FLOW-ZELLE UND VERFAHREN ZU IHRER MONTAGE SOWIE REDOX-FLOW-BATTERIE**
REDOX FLOW CELL AND METHOD FOR INSTALLATION THEREOF AND REDOX FLOW BATTERY
CELLULE À FLUX REDOX ET SON PROCÉDÉ D'INSTALLATION ET BATTERIE À FLUX REDOX

(30) Priorität: 29.04.2021 DE 102021111054
(43) Veröffentlichungstag der Anmeldung: 06.03.2024
(73) Patentinhaber: Schaeffler Technologies AG & Co. KG, 91074 Herzogenaurach (DE)
(72) Erfinder: FRANK, Matthias, 81545 München (DE); YAO, Yuan, 91074 Herzogenaurach (DE)
(86) Internationale Anmeldenummer: PCT/DE2022/100230
(87) Internationale Veröffentlichungsnummer: WO 2022/228604

(56) Entgegenhaltungen:
- EP-A1- 2 445 046
- CN-A- 102 867 974
- US-A1- 2013 307 227

## Beschreibung

Die vorliegende Erfindung betrifft eine Redox-Flow-Zelle mit einem Elektrodenmodul und mit einem Membranmodul. Das Elektrodenmodul umfasst einen Elektrodenrahmen, in welchem eine Elektrode angeordnet ist. Das Membranmodul umfasst einen Membranrahmen mit einer darin fest sitzenden Membran. Die Erfindung betrifft weiterhin eine Redox-Flow-Batterie sowie ein Verfahren zur Montage einer Redox-Flow-Zelle, wobei die Montage gleichzeitig zu einer Abdichtung einer Elektrode in einem Elektrodenmodul der Redox-Flow-Zelle führt.

Aus dem Stand der Technik sind elektrische Zellen bekannt, welche als Redox-Flow-Zellen bezeichnet werden und mit denen Redox-Flow-Batterien gebildet werden können. In der Bezeichnung "Redox" steht "Red" für Reduktion, worin eine Elektronenaufnahme zu sehen ist. "Ox" steht für Oxidation, worin eine Elektronenabgabe zu sehen ist. Redox-Flow-Zellen speichern elektrische Energie in chemischen Verbindungen, indem die Reaktionspartner in einem Lösungsmittel in gelöster Form vorliegen. Zwei energiespeichernde Elektrolyte zirkulieren dabei in zwei getrennten Kreisläufen, zwischen denen in der Zelle über eine Membran ein lonenaustausch erfolgt. Die energiespeichernden Elektrolyte werden bevorzugt außerhalb der Zelle in getrennten Tanks gelagert.

Redox-Flow-Zellen weisen bevorzugt einen Elektrodenrahmen auf, welcher eine metallische Elektrode der Zelle umrahmt. Der Elektrodenrahmen stellt einen Trägerrahmen für die Elektrode dar und dient auch der Abdichtung. Es bedarf einer umlaufenden Abdichtung zwischen dem Elektrodenrahmen und der Elektrode. Da der abzudichtende Elektrolyt chemisch aggressiv ist, ist die Auswahl des Werkstoffes für die Abdichtung limitiert. Auch beschränken die üblichen geringen Wandstärken des Elektrodenrahmens und der Elektrode die Auswahl eine geeigneten Systems für die Abdichtung. Aus dem Stand der Technik sind Lösungen zur Abdichtung bekannt, bei denen klassische Formteildichtungen zur Anwendung kommen. Diese Formteildichtungen werden in der Regel durch eine Nut im Elektrodenrahmen fixiert. Für eine kraftschlüssige Verbindung wird eine hinterschnittige Nut im Elektrodenrahmen benötigt, was aufgrund der umlaufenden geschlossenen Nut zu einem erhöhten Aufwand in der Herstellung führt. Da der Elektrodenrahmen eine Wandstärke von typisch weniger als 3 mm aufweist, ist aufgrund der filigranen Bauweise eine formschlüssige Nutverbindung kaum realisierbar. Aus dem Stand der Technik sind zudem Lösungen zur Abdichtung bekannt, bei denen so genannte Formed-in-Place-Dichtungen (FIP) verwendet werden, welche durch Dispensing-Verfahren appliziert werden, die sich aufgrund relativ langer Taktzeiten häufig als wirtschaftlich unrentabel erweisen. Zudem ist die Geometrie des Dichtprofils nur bedingt beeinflussbar. Dichtsysteme mit Formteil- und FIP-Dichtungen benötigen ein zusätzliches Element zur Erzeugung der Dichtungsvorspannung. Außerdem werden Dichtverbunde mit elastischen Klebstoffen verwendet. Aufgrund der chemischen Aggressivität des Elektrolyten kann es zu Auswaschungen am Klebstoff kommen. Zudem führen stark unterschiedliche Wärmeausdehnungen des aus einem thermoplastischen Kunststoff ausgeformten Elektrodenrahmens und der metallischen Elektrode insbesondere bei großen Formaten zu starken Scherspannungen in der Kleberaupe. Beide Effekte reduzieren die Lebensdauer eines solchen Dichtsystems maßgeblich.

Die EP 2 693 087 A1 zeigt ein Dichtungsmaterial für ein dünnes Plattenelement wie beispielsweise in einer Zelle einer Redox-Flow-Batterie. Das ringförmige Dichtungsmaterial umfasst einen seitlichen Dichtungskörper, der an einer Seite des dünnen Plattenelementes angeordnet ist. Auf zwei vom seitlichen Dichtungskörper abzweigenden Dichtungsbeinen sind die Vorderseite und die Rückseite des dünnen Plattenelementes angeordnet.

Die WO 2014/198364 A1 zeigt ein Elektrodenmodul für eine Redox-Flow-Batterie. Das Elektrodenmodul umfasst eine Elektrode und einen Dichtrahmen. Dabei soll die Elektrode derart mit dem Dichtrahmen verbunden werden, dass das daraus entstehende Elektrodenmodul problemlos in Redox-Flow-Zellen einsetzbar ist. Hierfür ist die Elektrode mechanisch mit dem Dichtrahmen verbunden. Am Dichtrahmen ist bevorzugt eine mehrlippige Dichtung angeordnet, welche an einer Membran anliegt. Der Dichtrahmen weist bevorzugt eine umlaufende Rinne auf, die nach außen konisch zulaufend ausgestaltet ist. Die Rinne weist bevorzugt einen Hinterschnitt auf.

Die WO 2013/016919 A1 zeigt einen Flow-Batteriestapel mit einem Durchflussrahmen und mit einer Kollektorplatte, die innerhalb des Durchflussrahmens angeordnet ist. Eine lonenaustauschmembran ist zwischen Kollektorplatten angeordnet und bildet einen Hohlraum, in dem ein Elektrolyt mit der Kollektorplatte untergebracht ist. Eine Elektrode ist innerhalb des Hohlraumes angeordnet. An den Seiten des Durchflussrahmens sind zwei Gruppen von Strömungsöffnungen ausgebildet.

Aus der EP 2 432 043 A1 ist ein Dichtungsrahmen zur Verwendung in einer Batterie bekannt, welcher einen eine Öffnung umgreifenden Grundkörper aufweist. Ein Auslösebereich ist an einem Rand der Öffnung ausgebildet. Angrenzend an den Auslösebereich ist eine durchgängige Ableitungsöffnung in dem Grundkörper ausgebildet. Eine Zelle mit einem Zellgehäuse ist von einer Siegelnaht umgeben. Die Zelle ist so an den Dichtungsrahmen angelegt, dass das Zellgehäuse in die Öffnung hineinreicht, um die Siegelnaht an der Dichtung anzulegen, wobei in dem Auslösebereich die Siegelnaht nicht von der Dichtung beaufschlagt ist. Mindestens eine umlaufende elastisch komprimierbare Dichtung ist vorgesehen, welche die Öffnung umgreift.

Die EP 3 113 272 A1 zeigt einen Rahmenkörper für eine Zelle einer Redox-Flow-Batterie. Der Rahmenkörper umfasst eine innerhalb des Rahmenkörpers ausgebildete Öffnung und einen Verteiler, durch den ein Elektrolyt hindurchtreten kann. Ein den Verteiler und die Öffnung verbindender Schlitz weist ein Paar von Seitenwänden auf, die sich in einem Querschnitt gegenüberstehen, der orthogonal zu einer Richtung ist, in welcher der Elektrolyt fließt.

Die zum Zeitpunkt der Anmeldung noch unveröffentlichte deutsche Patentanmeldung Nr. 10 2021 105 597.0 der Anmelderin zeigt ein Elektrodenmodul für eine Redox-Flow-Zelle. Dieses Elektrodenmodul umfasst einen Rahmen mit einer auf einem inneren Umfang des Rahmens angeordneten und umlaufend ausgebildeten Dichtung, welche mindestens zwei nach innen gerichtete elastische Dichtlippen aufweist. Zwischen zwei der Dichtlippen ist eine umlaufende Nut ausgebildet. Das Elektrodenmodul umfasst zudem eine Elektrode, die einen äußeren Umfang aufweist, mit welchem die Elektrode in der Nut der Dichtung sitzt. Zudem werden eine Redox-Flow-Zelle sowie ein Verfahren zur Montage eines Elektrodenmoduls für die Redox-Flow-Zelle beschrieben.

Die Aufgabe der vorliegenden Erfindung besteht ausgehend vom Stand der Technik darin, eine Bauweise und ein Verfahren zu Montage bereitzustellen, um eine Elektrode einer Redox-Flow-Zelle dicht und sicher in einem Elektrodenrahmen fixieren zu können.

Die genannte Aufgabe wird gelöst durch eine Redox-Flow-Zelle gemäß dem beigefügten Anspruch 1, durch eine Redox-Flow-Batterie gemäß dem beigefügten nebengeordneten Anspruch 9 sowie durch ein Verfahren gemäß dem beigefügten nebengeordneten Anspruch 10.

Bei der erfindungsgemäßen Redox-Flow-Zelle handelt es sich um eine Nasszelle und somit um einen elektrischen Akkumulator. Die Redox-Flow-Zelle speichert elektrische Energie in chemischen Verbindungen, wobei die Reaktionspartner in einem Lösungsmittel in gelöster Form in zwei energiespeichernden Elektrolyten vorliegen. Die beiden energiespeichernden Elektrolyte zirkulieren dabei in zwei getrennten Kreisläufen, zwischen denen in der Zelle durch eine Membran ein lonenaustausch erfolgt. Die Redox-Flow-Zelle ist bevorzugt durch eine Organic-Flow-Zelle aus ungiftigen Bestandteilen gebildet. Die Redox-Flow-Zelle wird durch mindestens eine Elektrode abgegrenzt, welche in einem Elektrodenmodul ausgebildet ist.

Das Elektrodenmodul der Redox-Flow-Zelle umfasst einen Elektrodenrahmen, der einen Trägerrahmen und auch einen Abdichtrahmen bildet. Hierfür umfasst der Elektrodenrahmen eine Dichtung, welche auf einem inneren Umfang des Elektrodenrahmens angeordnet ist. Die Dichtung ist umlaufend auf diesem inneren Umfang des Elektrodenrahmens ausgebildet und nach innen gerichtet. Die Dichtung weist mindestens einen Halterahmen und eine erste elastische Dichtlippe auf. Der Halterahmen ist bevorzugt in eine Richtung senkrecht zu einer Haupterstreckungsebene des Elektrodenrahmens ausgerichtet, wobei eine Seitenfläche des Halterahmens nach innen zeigt, d. h. zu einer mittleren Achse des Elektrodenrahmens, welche senkrecht zur Haupterstreckungsebene des Elektrodenrahmens ausgerichtet ist. Der Halterahmen weist an seinem inneren Umfang eine zumindest teilweise umlaufend ausgebildete Schnappnase zur umfänglichen Aufnahme einer Elektrode auf. Die Schnappnase ist bevorzugt auf der, nach innen zeigenden Seitenfläche des Halterahmens ausgebildet, sodass sie zu der mittleren Achse des Elektrodenrahmens ausgerichtet ist. Der Halterahmen ist bevorzugt aber nicht notwendig vollständig umlaufend ausgebildet, sodass er rahmenartig geformt ist. Die Schnappnase ist bevorzugt vollständig umlaufend ausgebildet oder alternativ bevorzugt mit Unterbrechungen umlaufend ausgebildet, wodurch die Elektrode bei der Montage mit weniger Kraftaufwand in die Dichtung eingeschnappt werden kann. Die elastische Schnappnase erlaubt geringfüge Verschiebungen und temperaturbedingte Größenänderungen der Elektrode in der Haupterstreckungsebene der Elektrode. Die erste elastische Dichtlippe ist innerhalb des inneren Umfanges des Halterahmens angeordnet, sodass sie einen kleineren Umfang als der Halterahmen beschreibt. Die erste elastische Dichtlippe ist zur seitlichen Abdichtung und seitlichen Abstützung der Elektrode ausgebildet. Die erste elastische Dichtlippe ist bevorzugt ebenfalls in eine Richtung senkrecht zu der Haupterstreckungsebene des Elektrodenrahmens ausgerichtet. Die erste elastische Dichtlippe verläuft bevorzugt parallel zum Halterahmen. Der Halterahmen liegt in einer Ebene, welche bevorzugt parallel zu einer Ebene ausgerichtet ist, in welcher die erste elastische Dichtlippe liegt und welche auch parallel zur Haupterstreckungsebene des Elektrodenrahmens liegt. In Bezug auf eine Achse, welche senkrecht zur Haupterstreckungsebene des Elektrodenrahmens angeordnet ist, ist die erste elastische Dichtlippe gegenüber dem Halterahmen axial versetzt angeordnet, sodass axial zwischen dem Halterahmen und der ersten elastischen Dichtlippe die Elektrode aufgenommen werden kann. Die bevorzugt plattenartig ausgebildete Elektrode bildet eine Komponente des Elektrodenmoduls und weist einen äußeren Umfang auf, mit welchem die Elektrode hinter die Schnappnase des Halterahmens eingeschnappt ist, wodurch die Elektrode seitlich gegen die erste Dichtlippe gepresst ist. Die Schnappnase ist gegen einen äußeren Umfang und gegen eine erste Seitenfläche der Elektrode gepresst, während die erste elastische Dichtlippe gegen eine zweite Seitenfläche der Elektrode gepresst ist, welche der ersten Seitenfläche gegenüberliegt. Die erste elastische Dichtlippe liegt bevorzugt vollständig an der Elektrode an. Die Elektrode ist bevorzugt metallisch. Die Elektrode wird durch den Halterahmen und die erste elastische Dichtlippe gehalten und fixiert sowie mindestens durch die erste Dichtlippe abgedichtet. Die Elektrode liegt gemeinsam mit dem Elektrodenrahmen in einer Ebene. Diese Ebene stellt die Haupterstreckungsebene des Elektrodenrahmens, der Dichtung und der Elektrode dar. Die Dichtung umschließt die Elektrode. Der Elektrodenrahmen umschließt die Dichtung mit der darin sitzenden Elektrode. Die Dichtung ist beständig gegen die chemisch aggressiven Elektrolyte der Redox-Flow-Zelle.

Die Redox-Flow-Zelle umfasst zudem ein fest mit dem Elektrodenmodul verbundenes Membranmodul. Das Membranmodul umfasst einen Membranrahmen und eine Membran, welche fest im Membranrahmen sitzt. Die Membran ist bevorzugt in den Membranrahmen eingeschweißt. Die Membran liegt gemeinsam mit dem Membranrahmen in einer Ebene. Diese Ebene stellt die Haupterstreckungsebene des Membranrahmens und der Membran dar. Das Elektrodenmodul und das Membranmodul sind bevorzugt dadurch fest miteinander verbunden, dass der Elektrodenrahmen des Elektrodenmoduls und der Membranrahmen des Membranmoduls fest miteinander verbunden sind, wobei der Elektrodenrahmen und der Membranrahmen fluchtend zueinander angeordnet sind.

Die Elektrode ist zwischen zumindest teilweise umlaufend angeordneten Anpresselementen des Membranrahmens einerseits und der ersten elastischen Dichtlippe der Dichtung des Elektrodenrahmens andererseits eingespannt bzw. eingepresst. Die Anpresselemente sind zumindest teilweise umlaufend um die mittlere Achse des Elektrodenrahmens angeordnet, nämlich axial mittelbar benachbart zu der ersten Dichtlippe. In Bezug auf die mittlere Achse des Elektrodenrahmens ist die Elektrode axial zwischen den umlaufend angeordneten Anpresselementen des Membranrahmens einerseits und der ersten elastischen Dichtlippe der Dichtung des Elektrodenrahmens andererseits angeordnet. Die umlaufend angeordneten Anpresselemente des Membranrahmens sind bevorzugt durch Ausprägungen des Membranrahmes gebildet, welche im Falle der bevorzugt rechteckumfänglichen Elektrode an jeder der vier Rechteckseiten vorhanden sind. Die umlaufend angeordneten Anpresselemente des Membranrahmens sind bevorzugt durch erhabene Dome gebildet. Die umlaufend angeordneten Anpresselemente sind in ihrer Gesamtheit bevorzugt umfänglich nicht geschlossen ausgebildet, um Durchflusskanäle für einen Elektrolyt zu bilden.

Ein besonderer Vorteil der Redox-Flow-Zelle besteht darin, dass die Dichtung gemeinsam mit den Anpresselementen des Membranrahmens sowohl die Abdichtung der Elektrode als auch deren sichere Lagerung ermöglicht. Die Elektrode kann schnell und einfach in den Elektrodenrahmen montiert werden, wobei eine Vorspannkraft bereits durch die Dichtung selbst erzeugt wird. Auch kann die Elektrode bei Bedarf aus dem Elektrodenrahmen entnommen werden.

Bei bevorzugten Ausführungsformen sind die Anpresselemente gegen eine Oberseite der bevorzugt plattenartig ausgebildeten Elektrode gepresst, während die erste elastische Dichtlippe gegen eine Unterseite der Elektrode gepresst ist. Die Elektrode ist somit kraftschlüssig zwischen den Anpresselementen einerseits und der ersten elastischen Dichtlippe andererseits eingepresst. Dies führt zu dem Vorteil, dass die Elektrode in einer Richtung senkrecht zu ihrer Haupterstreckungsebene fixiert und zudem sicher abgedichtet ist. Die Schnappnase presst gegen den äußeren Umfang der Elektrode und auch zumindest geringfügig gegen die Oberseite der Elektrode.

Die Schnappnase ermöglicht es, dass die Elektrode aufwandsarm in den Elektrodenrahmen montiert werden kann, wobei die oben beschriebene bevorzugte Ausrichtung des Halterahmens in eine Richtung senkrecht zu der Haupterstreckungsebene des Elektrodenrahmens ein Zurückfedern des Halterahmens mit der daran ausgebildeten Schnappnase gewährleistet. Die am Halterahmen ausgebildete Schnappnase liegt bevorzugt vollständig umfänglich auf der Elektrode auf, sodass die Schnappnase die Elektrode hält und bei besonderen Ausführungsformen zusätzlich abdichtet.

Die erste elastische Dichtlippe weist bevorzugt mehrere vollständig umlaufend ausgebildete Dichtnasen auf. Die Dichtnasen liegen vollständig an der Elektrode an. Die Dichtnasen liegen bevorzugt gemeinsam in einer Ebene, welche parallel zur Haupterstreckungsebene des Elektrodenrahmens liegt. In Bezug auf eine Achse, welche senkrecht zur Haupterstreckungsebene des Elektrodenrahmens angeordnet ist, sind die Dichtnasen bevorzugt radial nebeneinander und koaxial angeordnet. Die Dichtnasen beschreiben unterschiedlich große Umfänge. Durch die Ausbildung der mehreren Dichtnasen wird die Dichtwirkung der ersten Dichtlippe gegenüber der Elektrode erhöht. Die Dichtnasen sind bevorzugt axial neben den Anpresselementen des Membranrahmens angeordnet. Die Dichtnasen weisen bevorzugt jeweils einen flachen, verrundeten, dreieckförmigen oder spitzförmigen Querschnitt auf. Die erste elastische Dichtlippe weist bevorzugt drei der umlaufenden Dichtnasen auf. Eine mittlere der Dichtnasen bildet einen primären Dichtpfad und die beiden äußeren der Dichtnasen bilden einen sekundären Dichtpfad. Die mittlere Dichtnase weist bevorzugt einen abgerundeten Querschnitt auf. Die beiden äußeren der Dichtnasen weisen bevorzugt einen flachen Querschnitt auf, sodass sie mit einer größeren Fläche als die mittlere Dichtnase gegen die Elektrode gepresst werden, wodurch eine große Dichtfläche bewirkt wird, aber auch mögliche Unebenheiten der Elektrode geebnet werden.

Die Dichtung weist bevorzugt eine zweite elastische Dichtlippe auf, welche zwischen dem Halterahmen und der ersten elastischen Dichtlippe angeordnet ist. Die zweite elastische Dichtlippe ist umlaufend ausgebildet und liegt bevorzugt vollständig an der Elektrode an. Die zweite elastische Dichtlippe ist bevorzugt vollständig umlaufend um die mittlere Achse des Elektrodenrahmens ausgebildet. In Bezug auf die mittlere Achse des Elektrodenrahmens ist die zweite elastische Dichtlippe in radialer Richtung zwischen dem Halterahmen und der ersten elastischen Dichtlippe angeordnet. Die zweite elastische Dichtlippe liegt mit der ersten elastischen Dichtlippe bevorzugt gemeinsam in einer Ebene, welche parallel zur Haupterstreckungsebene der Elektrodenrahmens liegt.

In einer nochmals weitergebildeten Ausführungsform weist die Dichtung eine dritte elastische Dichtlippe auf, welche innerhalb eines inneren Umfanges der ersten elastischen Dichtlippe angeordnet ist. Die dritte elastische Dichtlippe ist umlaufend ausgebildet und liegt bevorzugt vollständig an der Elektrode an. Die dritte elastische Dichtlippe ist bevorzugt vollständig umlaufend um die mittlere Achse des Elektrodenrahmens ausgebildet. In Bezug auf die mittlere Achse des Elektrodenrahmens ist die dritte elastische Dichtlippe in radialer Richtung innenliegend neben der ersten elastischen Dichtlippe angeordnet. Die dritte elastische Dichtlippe liegt mit der ersten elastischen Dichtlippe bevorzugt gemeinsam in einer Ebene, welche parallel zur Haupterstreckungsebene der Elektrodenrahmens liegt.

Gemäß einer bevorzugten Ausführungsform bilden die zweite elastische Dichtlippe und/oder die dritte elastische Dichtlippe tertiäre Dichtpfade. Bevorzugt liegen die zweite elastische Dichtlippe und die dritte elastische Dichtlippe in radialer Richtung beiderseits der ersten elastischen Dichtlippe. Die zweite elastische Dichtlippe und/oder die dritte elastische Dichtlippe erhöhen die Dichtwirkung der Dichtung gegenüber der Elektrode und die Kraft auf die Elektrode gegen die Anpresselemente des Membranrahmens. Die zweite elastische Dichtlippe und/oder die dritte elastische Dichtlippe sind bevorzugt jeweils entgegen einem abzudichtenden Elektrolyten ausgerichtet.

Bei bevorzugten Ausführungsformen ist die Dichtung formschlüssig und/oder stoffschlüssig an dem inneren Umfang des Elektrodenrahmens befestigt. Diese Befestigung gewährleistet eine sichere Fixierung und eine Abdichtung der in der Dichtung sitzenden Elektrode gegenüber dem Elektrodenrahmen.

Bei besonders bevorzugten Ausführungsformen ist die Dichtung als ein Spritzgussteil auf dem inneren Umfang des Elektrodenahmens befestigt. Hierdurch ist die Dichtung formschlüssig und stoffschlüssig an dem inneren Umfang des Elektrodenrahmens befestigt.

Der Elektrodenrahmen weist auf seinem inneren Umfang bevorzugt einen den inneren Umfang seitlich begrenzenden Anschlag auf. Der Anschlag ist bevorzugt umlaufend um den inneren Umfang ausgebildet. Der Anschlag bildet eine Abstützung für die Dichtung. Zwischen dem inneren Umfang und dem Anschlag ist bevorzugt eine umlaufende konkave Kante ausgebildet. Der innere Umfang ist bevorzugt so ausgebildet, dass ein gefälltes Lot auf dem Umfang in der Haupterstreckungsebene des Elektrodenrahmens liegt. Der Anschlag ist bevorzugt senkrecht zum inneren Umfang des Elektrodenrahmens ausgerichtet, sodass die umlaufende konkave Kante einen Winkel von 90° aufweist. Die Dichtung sitzt bevorzugt in der umlaufenden konkaven Kante. Die umlaufende konkave Kante sorgt für eine sichere und dichte Fixierung der Dichtung im Elektrodenrahmen.

Bei abgewandelten Ausführungsformen ist die Dichtung als ein Spritzgussteil in die umlaufende konkave Kante des Elektrodenrahmens eingebracht, wodurch sie dort fest und dicht mit dem Elektrodenrahmen verbunden ist.

Die Dichtung ist bevorzugt elastisch und besteht bevorzugt aus einem Polymer. Das Polymer ist besonders bevorzugt durch ein thermoplastisches Elastomer (TPE), durch einen Ethylen-Propylen-Dien-Kautschuk (EPDM) oder durch einen Fluorkautschuk (FKM) gebildet. Die Dichtung bzw. das Polymer ist bevorzugt säurebeständig.

Der Elektrodenrahmen besteht bevorzugt aus einem Kunststoff, besonders bevorzugt aus einem thermoplastischen Kunststoff. Der Elektrodenrahmen ist bevorzugt säurebeständig.

Der Membranrahmen besteht bevorzugt aus einem Kunststoff, besonders bevorzugt aus einem thermoplastischen Kunststoff. Der Membranrahmen ist bevorzugt säurebeständig.

Die metallische Elektrode besteht bevorzugt aus einer Kupfer-Zink-Legierung oder aus einem Graphit. Die Elektrode kann aber auch aus einem anderen Metall bestehen. Die Elektrode ist bevorzugt porös ausgebildet. Die Elektrode ist bevorzugt durch eine dünnwandige Struktur gebildet. Die Elektrode weist bevorzugt die Form einer rechteckigen Platte auf. Insoweit weist die Elektrode die Form eines flachen Quaders auf.

Die Membran besteht bevorzugt aus einem Kunststoff. Die Membran ist bevorzugt mikroporös ausgebildet und bildet einen ionenselektiven Separator. Die Membran weist bevorzugt die Form einer rechteckigen Platte auf. Insoweit weist die Membran die Form eines flachen Quaders auf.

Die erfindungsgemäße Redox-Flow-Batterie umfasst eine Mehrzahl der erfindungsgemäßen Redox-Flow-Zellen. Die Redox-Flow-Zellen sind bevorzugt fluchtend zueinander angeordnet. Somit sind die Membranmodule und die Elektrodenmodule sämtlicher der Redox-Flow-Zellen bevorzugt fluchtend zueinander angeordnet. Jeweils eines der Membranmodule ist zwischen zweien der Elektrodenmodule angeordnet. Zwischen den Elektroden können Elektrolyte zirkulieren. Die Redox-Flow-Zellen sind bevorzugt gleich ausgeführt. Die Redox-Flow-Zellen der Redox-Flow-Batterie sind bevorzugt gemäß einer der oben beschriebenen bevorzugten Ausführungsformen ausgeführt.

Das erfindungsgemäße Verfahren dient zur Montage einer Redox-Flow-Zelle. In einem Schritt des Verfahrens wird eine metallische Elektrode für die Redox-Flow-Zelle bereitgestellt. Zudem wird ein Elektrodenrahmen für die Elektrode bereitgestellt, in welchen die Elektrode eingesetzt werden soll. Der Elektrodenrahmen umfasst eine auf einem inneren Umfang des Elektrodenrahmens angeordnete und umlaufend ausgebildete Dichtung. Die Dichtung weist mindestens einen Halterahmen und eine erste elastische Dichtlippe auf. Auf einem inneren Umfang des Halterahmens ist eine zumindest teilweise umlaufend ausgebildete Schnappnase zur umfänglichen Aufnahme der Elektrode ausgebildet. Die erste Dichtlippe ist innerhalb des inneren Umfanges des Halterahmens angeordnet und zur seitlichen Abdichtung und seitlichen Abstützung der Elektrode ausgebildet. In einem weiteren Schritt wird die Elektrode über die Schnappnase in die Dichtung gepresst. Hierzu wird die Elektrode über dem Elektrodenrahmen angeordnet und es wird eine Kraft in eine Richtung senkrecht zur Haupterstreckungsebene auf die Elektrode ausgeübt. Die Elektrode schnappt mit ihrem äußeren Umfang hinter die Schnappnase des Halterahmens ein und wird so seitlich gegen die erste elastische Dichtlippe gepresst. Der Elektrodenrahmen und die darin eingebrachte Elektrode bilden ein Elektrodenmodul der zu montierenden Redox-Flow-Zelle. Zudem wird ein Membranmodul bereitgestellt. Das Membranmodul umfasst einen Membranrahmen und eine Membran. Die Membran sitzt fest im Membranrahmen. Der Membranrahmen weist umlaufend angeordnete Anpresselemente auf. In einem weiteren Schritt werden das Elektrodenmodul und das Membranmodul fest miteinander verbunden, wodurch die Elektrode zwischen den umlaufend angeordneten Anpresselementen des Membranrahmens einerseits und der ersten elastischen Dichtlippe der Dichtung des Elektrodenrahmens andererseits eingespannt wird.

Bei der zu montierenden Redox-Flow-Zelle handelt es sich bevorzugt um die oben beschriebene erfindungsgemäße Redox-Flow-Zelle oder um eine der oben beschriebenen bevorzugten Ausführungsformen der erfindungsgemäßen Redox-Flow-Zelle.

Insoweit weisen die für das Verfahren bereitzustellende Elektrode, der für das Verfahren bereitzustellende Elektrodenrahmen und das für das Verfahren bereitzustellende Membranmodul bevorzugt auch die Merkmale auf, die im Zusammenhang mit der erfindungsgemäßen Redox-Flow-Zelle beschrieben sind.

Weitere Einzelheiten, Vorteile und Weiterbildungen der Erfindung ergeben sich aus der nachfolgenden Beschreibung einer bevorzugten Ausführungsform der Erfindung, unter Bezugnahme auf die Zeichnung. Es zeigen:
- Fig. 1: eine Veranschaulichung eines Abschnittes einer bevorzugten Ausführungsform eines erfindungsgemäßen Verfahrens zur Montage einer Redox-Flow-Zelle;
- Fig. 2: einen ersten Schritt des in Fig. 1 veranschaulichten Abschnittes des Verfahrens;
- Fig. 3: einen zweiten Schritt des in Fig. 1 veranschaulichten Abschnittes des Verfahrens;
- Fig. 4: einen dritten Schritt des in Fig. 1 veranschaulichten Abschnittes des Verfahrens;
- Fig. 5: einen Schritt eines weiteren Abschnittes des Verfahrens; und
- Fig. 6: die gemäß dem in Fig. 1 bis Fig. 5 veranschaulichten Verfahren montierte Redox-Flow-Zelle.

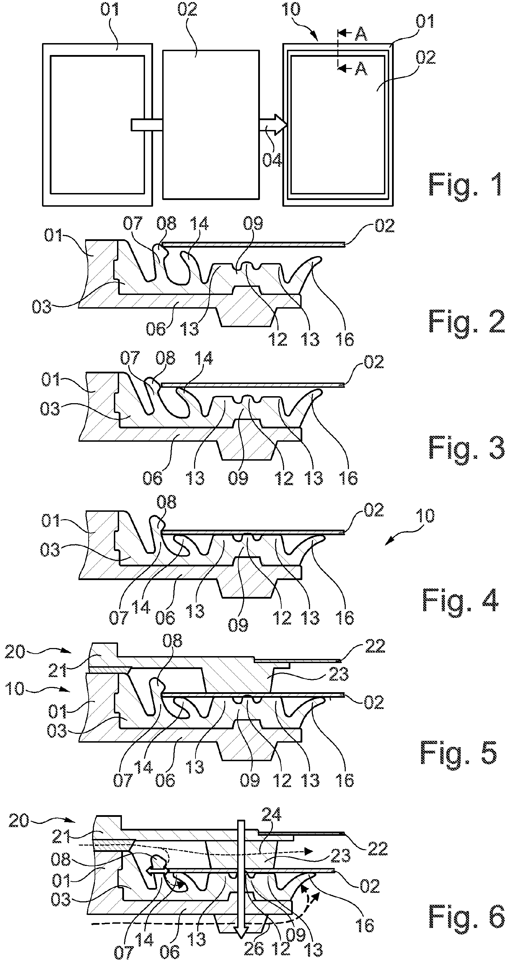

Fig. 1 veranschaulicht einen Abschnitt einer bevorzugten Ausführungsform eines erfindungsgemäßen Verfahrens zur Montage einer Redox-Flow-Zelle. In diesem Abschnitt erfolgt eine Montage eines Elektrodenmoduls der Redox-Flow-Zelle. Zunächst werden ein rechteckförmiger Elektrodenrahmen 01 und eine rechteckförmige Elektrode 02 bereitgestellt. Der Elektrodenrahmen 01 weist auf seinem inneren Umfang eine umlaufend ausgebildete elastische Dichtung 03 (gezeigt in Fig. 2) auf.

Ein breiter, horizontaler Pfeil 04 symbolisiert den Ablauf dieses Abschnittes des Verfahrens, in welchem die Elektrode 02 in den Elektrodenrahmen 01 gepresst wird, sodass im Ergebnis ein Elektrodenmodul 10 vorliegt. Das Elektrodenmodul 10 bildet eine Komponente einer bevorzugten Ausführungsform einer erfindungsgemäßen Redox-Flow-Zelle (gezeigt in Fig. 6). Der durch den Pfeil 04 symbolisierte Ablauf dieses Abschnittes des Verfahrens ist in einzelnen Schritten in den Figuren 2 bis 5 für einen Schnitt AA dargestellt.

Fig. 2 zeigt einen ersten Schritt des in Fig. 1 veranschaulichten Verfahrens. In diesem Schritt liegen der bereitgestellte Elektrodenrahmen 01 und die bereitgestellte Elektrode 02 vor. Die Elektrode 02 wurde mittig über dem Elektrodenrahmen 01 positioniert. In der Schnittdarstellung des Elektrodenrahmens 01 ist ein Querschnitt der innen umlaufenden Dichtung 03 zu erkennen. Die Dichtung 03 ist an dem inneren Umfang des Elektrodenrahmens 01, welcher durch einen Anschlag 06 einseitig seitlich begrenzt ist, per Spritzguss stoffschlüssig am Elektrodenrahmen 01 und am Anschlag 06 befestigt.

Die Dichtung 03 umfasst einen Halterahmen 07. Der Halterahmen 07 besitzt an seinem inneren Umfang eine teilweise umlaufend ausgebildete Schnappnase 08 zur umfänglichen Aufnahme der Elektrode 02. Die Dichtung 03 umfasst zudem eine erste elastische Dichtlippe 09, die umlaufend ausgebildet ist und eine mittlere umlaufend ausgebildete Dichtnase 12 sowie zwei äußere umlaufend ausgebildete Dichtnasen 13 aufweist. Die mittlere Dichtnase 12 besitzt einen abgerundeten Querschnitt. Die beiden äußeren Dichtnasen 13 besitzen einen flachen Querschnitt. Die Dichtung 03 umfasst zudem eine zweite elastische Dichtlippe 14, welche umlaufend ausgebildet ist und zwischen der ersten elastischen Dichtlippe 07 und der ersten elastischen Dichtlippe 09 angeordnet ist. Die Dichtung 03 umfasst weiterhin eine dritte elastische Dichtlippe 16, welche umlaufend ausgebildet ist und innerhalb eines inneren Umfanges der ersten elastischen Dichtlippe 09 angeordnet ist.

Fig. 3 zeigt einen zweiten Schritt des in Fig. 1 veranschaulichten Verfahrens. Die Elektrode 02 wurde bereits teilweise in die Dichtung 03 hineingepresst, nämlich in die Schnappnase 08 des umlaufenden Halterahmens 07, sodass der Halterahmen 07 etwas nach außen gefedert ist.

Fig. 4 zeigt einen dritten Schritt des in Fig. 1 veranschaulichten Verfahrens. Die Elektrode 02 ist noch weiter in die Dichtung 03 hineingepresst worden, sodass die Schnappnase 08 des Halterahmens 07 über die Elektrode 02 geschnappt ist, sodass die Elektrode 02 mit ihrer Unterseite gegen die erste elastische Dichtlippe 09, gegen die zweite elastische Dichtlippe 14 und gegen die dritte elastische Dichtlippe 16 gepresst ist. Das Elektrodenmodul 10 ist somit montiert.

Fig. 5 zeigt einen Schritt eines weiteren Abschnittes des Verfahrens, welcher dem in den Fig. 1 bis Fig. 4 veranschaulichten Abschnitt des Verfahrens folgt. In diesem Schritt wird ein Membranmodul 20 auf das Elektrodenmodul 10 gesetzt, um das Membranmodul 20 mit dem Elektrodenmodul 10 zu verbinden. Das Membranmodul 20 umfasst einen Membranrahmen 21 und eine Membran 22, welche fest im Membranrahmen 21 sitzt. Der Membranrahmen 21 weist umlaufend angeordnete Anpresselemente 23 in Form von Domen auf. Beim Aufsetzen des Membranmoduls 20 auf das Elektrodenmodul 10 stoßen die Anpresselemente 23 auf die Elektrode 02, sodass diese zwischen den Anpresselementen 23 und der ersten elastischen Dichtlippe 09 eingespannt wird. Im Ergebnis liegt die montierte Redox-Flow-Zelle vor.

Fig. 6 zeigt die gemäß dem in Fig. 1 bis Fig. 5 veranschaulichten Verfahren montierte Redox-Flow-Zelle. Die Elektrode 02 ist hinter bzw. unter die Schnappnase 08 eingeschnappt, sodass die Elektrode 02 vom Halterahmen 07 fixiert ist. Die Elektrode 02 ist durch die erste elastische Dichtlippe 09, durch die zweite elastische Dichtlippe 14 und durch die dritte elastische Dichtlippe 16 abgedichtet.

Ein gestrichelter, leicht gekrümmter Pfeil 24 symbolisiert den Fluss und die Druckwirkung eines ersten Mediums (nicht gezeigt), welches im Betriebszustand durch die Redox-Flow-Zelle strömt. Diese Druckwirkung erhöht u. a. die Dichtwirkung der zweiten elastischen Dichtlippe 14. Ein gestrichelter, am Ende stark gekrümmter Pfeil 26 symbolisiert den Fluss und die Druckwirkung eines zweiten Mediums (nicht gezeigt), welches im Betriebszustand durch die Redox-Flow-Zelle strömt. Diese Druckwirkung erhöht u. a. die Dichtwirkung der dritten elastischen Dichtlippe 16.

### Bezugszeichenliste

- 01: Elektrodenrahmen
- 02: Elektrode
- 03: Dichtung
- 04: Pfeil
- 05: -
- 06: Anschlag
- 07: Halterahmen
- 08: Schnappnase
- 09: erste elastische Dichtlippe
- 10: Elektrodenmodul
- 11: -
- 12: mittlere Dichtnase
- 13: äußere Dichtnasen
- 14: zweite elastische Dichtlippe
- 15: -
- 16: dritte elastische Dichtlippe
- 17: -
- 18: -
- 19: -
- 20: Membranmodul
- 21: Membranrahmen
- 22: Membran
- 23: Anpresselemente
- 24: Pfeil
- 25: -
- 26: Pfeil

## Patentansprüche

1. Redox-Flow-Zelle, umfassend:
- ein Elektrodenmodul (10), welches einen Elektrodenrahmen (01) mit einer an seinem inneren Umfang umlaufend ausgebildeten Dichtung (03) umfasst, wobei die Dichtung (03) mindestens einen Halterahmen (07) und eine erst elastische Dichtlippe (09) aufweist; wobei am inneren Umfang des Halterahmens (07) eine zumindest teilweise umlaufend ausgebildete Schnappnase (08) zur Aufnahme einer Elektrode (02) ausgebildet ist; wobei die erste elastische Dichtlippe (09) innerhalb des inneren Umfanges des Halterahmens (07) angeordnet ist und zur Abdichtung und Abstützung der Elektrode (02) ausgebildet ist; und wobei das Elektrodenmodul (10) weiterhin die Elektrode (02) umfasst, die an ihrem äußeren Umfang hinter die Schnappnase (08) der ersten elastischen Dichtlippe (07) eingeschnappt ist, wodurch die Elektrode (02) gegen die erste elastische Dichtlippe (09) gepresst ist; und
- ein mit dem Elektrodenmodul (10) verbundenes Membranmodul (20), welches einen Membranrahmen (21) und eine Membran (22) umfasst, wobei die Membran (22) fest im Membranrahmen (21) sitzt;
wobei die Elektrode (02) zwischen umlaufend angeordneten Anpresselementen (23) des Membranrahmens (21) und der ersten elastischen Dichtlippe (09) der Dichtung (03) des Elektrodenrahmens (01) eingespannt ist.

2. Redox-Flow-Zelle nach Anspruch 1, **dadurch gekennzeichnet, dass** die Anpresselemente (23) gegen eine Oberseite der Elektrode (02) gepresst sind und dass die erste elastische Dichtlippe (09) gegen eine Unterseite der Elektrode (02) gepresst ist.

3. Redox-Flow-Zelle nach Anspruch 1 oder 2, **dadurch gekennzeichnet, dass** die erste elastische Dichtlippe (09) mehrere umlaufend ausgebildete Dichtnasen (12, 13) aufweist.

4. Redox-Flow-Zelle nach einem der Ansprüche 1 bis 3, **dadurch gekennzeichnet, dass** die Dichtung (03) eine zweite elastische Dichtlippe (14) umfasst, welche umlaufend ausgebildet ist und zwischen dem Halterahmen (07) und der ersten elastischen Dichtlippe (09) angeordnet ist.

5. Redox-Flow-Zelle nach einem der Ansprüche 1 bis 4, **dadurch gekennzeichnet, dass** die Dichtung (03) eine dritte elastische Dichtlippe (16) umfasst, welche umlaufend ausgebildet ist und innerhalb des inneren Umfanges der ersten elastischen Dichtlippe (09) angeordnet ist.

6. Redox-Flow-Zelle nach einem der Ansprüche 1 bis 5, **dadurch gekennzeichnet, dass** die Dichtung (03) formschlüssig und/oder stoffschlüssig an dem inneren Umfang des Elektrodenahmens (01) befestigt ist.

7. Redox-Flow-Zelle nach einem der Ansprüche 1 bis 6, **dadurch gekennzeichnet, dass** die Dichtung (03) als ein Spritzgussteil an dem inneren Umfang des Elektrodenrahmens (01) befestigt ist.

8. Redox-Flow-Zelle nach einem der Ansprüche 1 bis 7, **dadurch gekennzeichnet, dass** der Elektrodenrahmen (01) an seinem inneren Umfang einen den inneren Umfang seitlich begrenzenden Anschlag (06) aufweist, wobei zwischen dem inneren Umfang und dem Anschlag (06) eine umlaufende konkave Kante ausgebildet ist, in welcher die Dichtung (03) sitzt.

9. Redox-Flow-Batterie, umfassend eine Mehrzahl an Redox-Flow-Zellen gemäß einem der Ansprüche 1 bis 8, wobei jeweils eines der Membranmodule (20) zwischen zweien der Elektrodenmodule (10) angeordnet ist.

10. Verfahren zur Montage einer Redox-Flow-Zelle, folgende Schritte umfassend:
- Bereitstellen einer Elektrode (02);
- Bereitstellen eines Elektrodenrahmens (01) für die Elektrode (02), der eine auf einem inneren Umfang des Elektrodenrahmens (01) angeordnete und umlaufend ausgebildete Dichtung (03) umfasst, wobei die Dichtung (03) mindestens einen Halterahmen (07) und eine erste elastische Dichtlippe (09) aufweist; wobei am inneren Umfang des Halterahmens (07) eine zumindest teilweise umlaufend ausgebildete Schnappnase (08) zur Aufnahme der Elektrode (02) ausgebildet ist; wobei die erste elastische Dichtlippe (09) innerhalb des inneren Umfanges des Halterahmens (07) angeordnet ist und zur seitlichen Abdichtung und Abstützung der Elektrode (02) ausgebildet ist;
- Pressen der Elektrode (02) über die Schnappnase (08) des Halterahmens (07), wodurch die Elektrode (02) mit ihrem äußeren Umfang hinter die Schnappnase (08) des Halterahmens (07) einschnappt und die Elektrode (02) seitlich gegen die erste elastische Dichtlippe (09) gepresst wird, sodass der Elektrodenrahmen (01) und die darin eingebrachte Elektrode (02) ein Elektrodenmodul (10) bilden;
- Bereitstellen eines Membranmoduls (20), welches einen Membranrahmen (21) und eine Membran (22) umfasst, wobei die Membran (22) fest im Membranrahmen (21) sitzt, und wobei der Membranrahmen (22) umlaufend angeordnete Anpresselemente (23) aufweist; und
- Verbinden des Elektrodenmoduls (10) mit dem Membranmodul (20), wodurch die Elektrode (02) zwischen den Anpresselementen (23) des Membranrahmens (21) und der ersten elastischen Dichtlippe (09) der Dichtung (03) des Elektrodenrahmens (01) eingespannt wird.

## Claims

1. A redox flow cell, comprising:
- an electrode module (10), which comprises an electrode frame (01) having a seal (03) extending around its inner circumference, wherein the seal (03) has at least one holding frame (07) and a first resilient sealing lip (09); wherein an at least partially circumferential snap-action catch (08) for receiving an electrode (02) is formed on the inner circumference of the holding frame (07); wherein the first resilient sealing lip (09) is arranged within the inner circumference of the holding frame (07) and is designed for sealing and supporting the electrode (02); and wherein the electrode module (10) further comprises the electrode (02), the outer circumference of which is snapped behind the snap-action catch (08) of the first resilient sealing lip (07), so that the electrode (02) is pressed against the first resilient sealing lip (09); and
- a membrane module (20) connected to the electrode module (10), which comprises a membrane frame (21) and a membrane (22), wherein the membrane (22) is firmly seated in the membrane frame (21);
wherein the electrode (02) is clamped between circumferentially arranged pressing elements (23) of the membrane frame (21) and the first resilient sealing lip (09) of the seal (03) of the electrode frame (01).

2. The redox flow cell according to claim 1, **characterised in that** the pressing elements (23) are pressed against an upper side of the electrode (02) and **in that** the first resilient sealing lip (09) is pressed against an underside of the electrode (02).

3. The redox flow cell according to claim 1 or 2, **characterised in that** the first resilient sealing lip (09) has a plurality of circumferentially formed sealing catches (12, 13).

4. The redox flow cell according to any one of claims 1 to 3, **characterised in that** the seal (03) comprises a second resilient sealing lip (14) that is formed circumferentially and is arranged between the holding frame (07) and the first resilient sealing lip (09).

5. The redox flow cell according to any one of claims 1 to 4, **characterised in that** the seal (03) comprises a third resilient sealing lip (16) that is formed circumferentially and is arranged inside the inner circumference of the first resilient sealing lip (09).

6. The redox flow cell according to any one of claims 1 to 5, **characterised in that** the seal (03) is attached in a form-fitting and/or material-fitting manner to the inner circumference of the electrode frame (01).

7. The redox flow cell according to any one of claims 1 to 6, **characterised in that** the seal (03) is attached to the inner circumference of the electrode frame (01) as an injection-moulded part.

8. The redox flow cell according to any one of claims 1 to 7, **characterised in that** the electrode frame (01) has on its inner circumference a stop (06) laterally delimiting the inner circumference, wherein a circumferential concave edge is formed between the inner circumference and the stop (06), the seal (03) being seated in said edge.

9. A redox flow battery comprising a plurality of redox flow cells according to any one of claims 1 to 8, wherein one of the membrane modules (20) is arranged respectively between two of the electrode modules (10).

10. A method for installing a redox flow cell, comprising the following steps:
- providing an electrode (02);
- providing an electrode frame (01) for the electrode (02), which comprises a seal (03) extending around an inner circumference of the electrode frame (01), wherein the seal (03) has at least one holding frame (07) and a first resilient sealing lip (09); wherein an at least partially circumferential snap-action catch (08) for receiving an electrode (02) is formed on the inner circumference of the holding frame (07); wherein the first resilient sealing lip (09) is arranged within the inner circumference of the holding frame (07) and is designed for sealing and supporting the electrode (02);
- pressing the electrode (02) over the snap-action catch (08) of the holding frame (07), so that the electrode (02) snaps with its outer circumference behind the snap-action catch (08) of the holding frame (07) and the electrode (02) is pressed laterally against the first resilient sealing lip (09), so that the electrode frame (01) and the electrode (02) introduced therein form an electrode module (10);
- providing a membrane module (20) which comprises a membrane frame (21) and a membrane (22), wherein the membrane (22) is firmly seated in the membrane frame (21), and wherein the membrane frame (22) has circumferentially arranged pressing elements (23); and
- connecting the electrode module (10) to the membrane module (20), so that the electrode (02) is clamped between the pressing elements (23) of the membrane frame (21) and the first resilient sealing lip (09) of the seal (03) of the electrode frame (01).

## Revendications

1. Cellule à flux Redox, comprenant :
- un module d'électrode (10), qui comprend un cadre d'électrode (01) avec un joint (03) formé tout autour de sa circonférence interne, dans laquelle le joint (03) présente au moins un cadre de maintien (07) et une première lèvre d'étanchéité élastique (09) ; dans laquelle un nez d'encliquetage (08) au moins partiellement circonférentiel est formé sur la circonférence interne du cadre de maintien (07) pour recevoir une électrode (02) ; dans laquelle la première lèvre d'étanchéité élastique (09) est agencée à l'intérieur de la circonférence interne du cadre de maintien (07) et est conçue pour sceller et supporter l'électrode (02) ; et dans laquelle le module d'électrode (10) comprend en outre l'électrode (02), qui est encliquetée sur sa circonférence externe derrière le nez d'encliquetage (08) de la première lèvre d'étanchéité élastique (07), moyennant quoi l'électrode (02) est pressée contre la première lèvre d'étanchéité élastique (09) ; et
- un module de membrane (20) relié au module d'électrode (10), qui comprend un cadre de membrane (21) et une membrane (22), dans laquelle la membrane (22) est fermement logée dans le cadre de membrane (21) ;
dans laquelle l'électrode (02) est serrée entre des éléments de pression (23) agencés circonférentiellement du cadre de membrane (21) et la première lèvre d'étanchéité élastique (09) du joint (03) du cadre d'électrode (01).

2. Cellule à flux Redox selon la revendication 1, **caractérisée en ce que** les éléments de pression (23) sont pressés contre une face supérieure de l'électrode (02) et **en ce que** la première lèvre d'étanchéité élastique (09) est pressée contre une face inférieure de l'électrode (02).

3. Cellule à flux Redox selon la revendication 1 ou 2, **caractérisée en ce que** la première lèvre d'étanchéité élastique (09) présente plusieurs nez d'étanchéité (12, 13) circonférentiels.

4. Cellule à flux Redox selon l'une des revendications 1 à 3, **caractérisée en ce que** le joint (03) comprend une deuxième lèvre d'étanchéité élastique (14) qui est conçue de manière circonférentielle et est agencée entre le cadre de maintien (07) et la première lèvre d'étanchéité élastique (09).

5. Cellule à flux Redox selon l'une des revendications 1 à 4, **caractérisée en ce que** le joint (03) comprend une troisième lèvre d'étanchéité élastique (16) qui est conçue de manière circonférentielle et est agencée à l'intérieur de la circonférence interne de la première lèvre d'étanchéité élastique (09).

6. Cellule à flux Redox selon l'une des revendications 1 à 5, **caractérisée en ce que** le joint (03) est fixé sur la circonférence interne du cadre d'électrode (01) par complémentarité de forme et/ou par complémentarité de matériau.

7. Cellule à flux Redox selon l'une des revendications 1 à 6, **caractérisée en ce que** le joint (03) est fixé sous forme de pièce moulée par injection sur la circonférence interne du cadre d'électrode (01).

8. Cellule à flux Redox selon l'une des revendications 1 à 7, **caractérisée en ce que** le cadre d'électrode (01) présente sur sa circonférence interne une butée (06) qui délimite latéralement la circonférence interne, dans laquelle un bord concave circonférentiel, dans lequel est logé le joint (03), est formé entre la circonférence interne et la butée (06).

9. Batterie à flux Redox comprenant une pluralité de cellules à flux Redox selon l'une des revendications 1 à 8, dans laquelle respectivement l'un des modules de membrane (20) est agencé entre deux des modules d'électrodes (10).

10. Procédé d'installation d'une cellule à flux Redox, comprenant les étapes suivantes :
- mise à disposition d'une électrode (02) ;
- mise à disposition d'un cadre d'électrode (01) pour l'électrode (02), qui comprend un joint (03) agencé sur une circonférence interne du cadre d'électrode (01) et formé tout autour, dans lequel le joint (03) présente au moins un cadre de maintien (07) et une première lèvre d'étanchéité élastique (09) ; dans lequel un nez d'encliquetage (08) au moins partiellement circonférentiel est formé sur la circonférence interne du cadre de maintien (07) pour recevoir l'électrode (02) ; dans lequel la première lèvre d'étanchéité élastique (09) est agencée à l'intérieur de la circonférence interne du cadre de maintien (07) et est conçue pour sceller latéralement et supporter l'électrode (02) ;
- pression de l'électrode (02) sur le nez d'encliquetage (08) du cadre de maintien (07), moyennant quoi l'électrode (02) s'encliquette avec sa circonférence externe derrière le nez d'encliquetage (08) du cadre de maintien (07) et l'électrode (02) est pressée latéralement contre la première lèvre d'étanchéité élastique (09), de sorte que le cadre d'électrode (01) et l'électrode (02) insérée à l'intérieur forment un module d'électrode (10) ;
- mise à disposition d'un module de membrane (20), qui comprend un cadre de membrane (21) et une membrane (22), dans lequel la membrane (22) est logée fermement dans le cadre de membrane (21), et dans lequel le cadre de membrane (22) présente des éléments de pression (23) agencés de manière circonférentielle ; et
- liaison du module d'électrode (10) au module de membrane (20), moyennant quoi l'électrode (02) est serrée entre les éléments de pression (23) du cadre de membrane (21) et la première lèvre d'étanchéité élastique (09) du joint (03) du cadre d'électrode (01).
